Europäisches Patentamt

European Patent Office

Office européen des brevets

(11) Veröffentlichungsnummer: **0 085 421**
**B1**

(12) **EUROPÄISCHE PATENTSCHRIFT**

(45) Veröffentlichungstag der Patentschrift:
**29.05.85**

(51) Int. Cl.⁴: **C 02 F 3/28**

(21) Anmeldenummer: **83100842.0**

(22) Anmeldetag: **29.01.83**

(54) **Verfahren und Einrichtung zur biologischen Schlammbehandlung.**

(30) Priorität: **02.02.82 DE 3203445**

(43) Veröffentlichungstag der Anmeldung:
**10.08.83 Patentblatt 83/32**

(45) Bekanntmachung des Hinweises auf die Patenterteilung:
**29.05.85 Patentblatt 85/22**

(84) Benannte Vertragsstaaten:
**AT BE CH DE FR GB IT LI LU NL SE**

(56) Entgegenhaltungen:
**DE - A - 1 459 464**
**DE - A - 1 908 596**
**GB - A - 2 013 170**
**US - A - 1 999 973**
**US - A - 2 528 649**

(73) Patentinhaber: **MANNESMANN VEBA UMWELTTECHNIK GMBH, Südstrasse 41, D-4690 Herne 2 (DE)**

(72) Erfinder: **Ulrici, Wolfgang, Dr., Blücherstrasse 13, D-5300 Bonn 1 (DE)**

(74) Vertreter: **Meissner, Peter E., Dipl.-Ing. et al, Patentanwälte Dipl.-Ing. Peter E. Meissner Dipl.-Ing. Hans-Joachim Presting Herbertstrasse 22, D-1000 Berlin 33 (DE)**

## Beschreibung

Die Erfindung betrifft ein Verfahren und eine Einrichtung zur Behandlung von organisch belasteten Schlämmen durch Hydrolyse und saure Gärung unter Luftabschluß, wobei der Restschlamm im Gärreaktor sedimentiert und laufend aus diesem abgezogen wird. Die Gärflüssigkeit wird ebenfalls aus dem Gärreaktor abgezogen, gegebenenfalls von mitgeführtem Gärschlamm befreit, der in den Gärreaktor zurückgeführt wird, und sodann ausgefault.

Bei einem derartigen, aus DE-A-2 621 524 bekannten Verfahren ist dem Behälter, in dem die Hydrolyse und saure Gärung stattfindet, ein Absetzbehälter nachgeordnet, aus dem der sedimentierte Restschlamm als eine von zwei Stoffkomponenten und die Gärflüssigkeit als die andere Komponente entnommen werden. Beide Komponenten durchlaufen in einer zweiten Behandlungsstufe getrennt einen Faulprozeß. Bei durchschnittlichen Schlämmen erbringt die Ausfaulung des Restschlammes nur etwa 20% der gesamten Faulgaserzeugung. Diesem kleinen Nutzen steht unwirtschaftlich ein relativ großer Apparateaufwand gegenüber, den Restschlamm deponiefähig zu machen. Die Ausfaulung des Restschlammes erscheint unverzichtbar wegen dessen Belastung mit übelriechenden Schadstoffen.

Aus der US-A-2 528 649 ist ein Gärbehälter bekannt, an dessen Unterseite eine Leitung angeschlossen ist, die unmittelbar zu einem Schlammwaschbehälter führt. In diesem sammelt sich das am weitesten vergorene Material unten im Behälter an, so daß dieser sedimentierend wirkt.

Die Erfindung hat zum Ziel, den Restschlamm wirtschaftlich zu behandeln, bevor er ausgetragen wird. Erfindungsgemäß wird hierfür der aus dem Gärreaktor abgezogene Restschlamm ausgewaschen, dadurch ausgelaugt und sodann ausgetragen. Durch das Waschen wird dem Restschlamm die ihm anhaftende Gärflüssigkeit, die wesentlich zur Geruchsbelästigung beiträgt, entzogen. Die mit der ausgewaschenen Gärflüssigkeit belastete Waschflüssigkeit wird der aus dem Gärreaktor abgezogenen Gärflüssigkeit zugesetzt und mit dieser zusammen dem Faulprozeß unterworfen.

Die Trennung der Abzüge für Gärflüssigkeit und Restschlamm ermöglicht es, die Verweilzeiten dieser beiden Komponenten im Gärreaktor verschieden einzustellen. Während die den größten Teil des Volumens ausmachende Gärflüssigkeit nach kürzester Zeit abgezogen werden kann, kann man den einen kleineren Volumenanteil ausmachenden Schlamm länger im Gärreaktor belassen ohne den Gärreaktor wesentlich vergrößern zu müssen. Der Abbaugrad des auszutragenden Restschlammes kann so unabhängig von der Verweilzeit der Gärflüssigkeit im Gärreaktor gesteuert werden.

Als Waschflüssigkeit kann Frischwasser verwendet werden. Bevorzugt wird aber hierfür die ausgefaulte Gärflüssigkeit — im weiteren mit Faulwasser bezeichnet — benutzt, die zum einen die passende Prozeßtemperatur aufweist und zum anderen leicht alkalisch ist, während die Restschlammflüssigkeit sauer reagiert. Beim Auswaschen tritt also ein Neutralisationseffekt auf.

Die Schlammwäsche mit Frischwasser oder rückgeführtem, gereinigtem Abwasser ist an sich seit langem bekannt. Sie wurde eingesetzt zur Verhinderung des Flockmittelbedarfes bei der Schlammabscheidung. Beim vorliegenden erfindungsgemäßen Verfahren hingegen wird aus der Beobachtung Nutzen gezogen, daß der Restschlamm selbst kaum zu einer Geruchsbelästigung führt, diese vielmehr im wesentlichen auf die anhaftende Gärflüssigkeit zurückzuführen ist. In Verbindung mit dem durch den getrennten Abzug ermöglichten ausreichenden Abbau des Schlammes führt die Wäsche zu einem Restschlamm, der in der Regel direkt deponiert werden kann.

Hydrolyse und saure Gärung sollen in demselben Behälter stattfinden, in dem sich der Restschlamm absetzt. Nur durch lange Verweilzeiten des Restschlammes in diesem Behälter wird erreicht, daß die biologisch durch Mikroben auflösbaren Umhüllungen der Restschlammkörnchen möglichst restlos ihre Bindung an den Körnchen verlieren. Das oben genannte bekannte Verfahren widerspricht dieser Erkenntnis, liefert also vor der Restschlammfaulung einen Restschlamm, der, wenn man ihn auswaschen würde, nur unvollkommen waschbar ist. Ein derartig ausgewaschener Restschlamm wäre auf jeden Fall durch Zugabe von Chemikalien wie z. B. Kalk, aufzubereiten oder auch aerob zu fermentieren. Obwohl eine solche Nachbehandlung bereits eine Verbilligung des Verfahrens darstellt, kann man bei Durchschnittsschlämmen ganz oder nahezu auf diese Nachbehandlung verzichten, wenn der aus dem Gärreaktor abgezogene Restschlamm bereits dort weitgehend ausgegoren ist.

Da wegen des trägen Prozeßverlaufes einer biologischen Schlammbehandlung für die Erzielung einer ausreichenden Verweilzeit des Restschlammes im Gärbehälter Steuereingriffe nur im Stundenmaß-Rhythmus stattfinden sollten, genügt es, in größeren Zeitabständen Proben des ausgelaufenen Restschlammes zu ziehen und dessen Abbaugrad durch Bestimmung ihrer Ausfaulung zu ermitteln. Nach dem Ergebnis dieser Analyse wird die Verweilzeit des Restschlammes im Gärreaktor durch Erhöhung oder Verminderung der laufend abgezogenen Menge Restschlamm verkürzt oder verlängert. Die labormäßige Behandlung der Proben wird zweckmäßig dadurch gekürzt, daß als ausreichend repräsentativ nur die Anfangsfaulrate der Proben ermittelt wird. Dabei bewirkt die Inkubation der Proben mit Bakterienkulturen aus dem Faulreaktor der Gärflüssigkeit eine zur Präzision des Regelvorganges zweckmäßige Kleinhaltung der Zeitverschiebung.

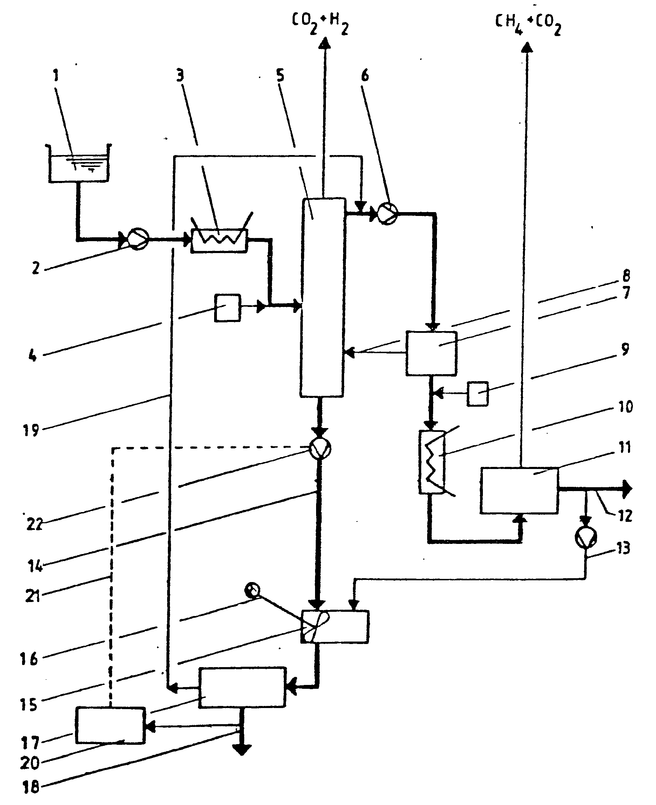

In der Zeichnung ist eine zur Durchführung des Verfahrens zweckmäßige Anlage als Ausführungsbeispiel dargestellt. Sie zeigt das Schema einer Anlage zur vollständigen Behandlung von organisch belasteten Schlämmen mit Austrag von kanalisierbarem Faulwasser, von deponierbarem Restschlamm und von Faulgas.

In einem Schlammbehälter 1 befindet sich Schlamm etwa aus einer kommunalen Kläranlage. Der Schlamm wird mit einer Pumpe 2 fortlaufend in einen Gärreaktor 5 gefördert, wobei er in einem Erhitzer 3 auf etwa 37°C erwärmt und mit einer Chemikalienzugabe 4 auf einen pH-Wert von 5 bis 6 eingestellt wird. Nach einer durchschnittlichen hydraulischen Verweilzeit im Gärreaktor 5 von etwa 12 Stunden unter Abgabe von Gärgas $CO_2 + H_2$ wird der dünnflüssige Anteil des sauer vergorenen Schlamms am Kopf des Gärreaktors 5 als Gärflüssigkeit abgezogen und über eine Pumpe 6 einem Dekanter 7 zugeführt. In dem Dekanter wird die Trübe der dünnen Flüssigkeit verringert. Der schlammige Rückstand wird durch ein Rohr 8 in den Gärreaktor zurückgeführt. Eine Chemikalienzugabe 9 neutralisiert die ziemlich enttrübte Gärflüssigkeit so weit, daß bei der weiteren Behandlung ein neutraler bis leicht alkalischer Zustand entsteht. Unter einer durch einen Erhitzer 10 geregelten Temperatur von etwa 37°C gelangt die Gärflüssigkeit in einen Faulbehälter 11. Nach einer durchschnittlichen Verweilzeit von 12 Stunden verläßt die darin kontinuierlich unter Abgabe von Faulgas $CH_4 + CO_2$ ausgefaulte Flüssigkeit als Faulwasser den Behälter 11. Der größte Teil des Austritts 12 wird kanalisierbar nachgeklärt oder z. B. auf Feldern verregnet.

Der unmittelbar im Gärreaktor 5 sedimentierte Restschlamm, der im wesentlichen aus nicht abbaubaren Feststoffen besteht, wird durch die Rohrleitung 14 in einen Restschlammbehälter 15 gefördert, in dem er mit einem Teil des durch eine Leitung 13 geförderten Faulwassers gemischt und mit einem Rührwerk 16 innig vermengt wird, also gewaschen wird. Bei dem Waschen werden die meist körnigen Feststoffteilchen von der sie hautartig umgebenden Gärflüssigkeit befreit. Aus dem Behälter 15 gelangt das Gemisch in eine Absetz- bzw. Eindickvorrichtung 17. Der ausgelaugte und eingedickte Restschlamm (Austragsstrom 18) wird deponiert oder einer Weiterverwendung zugeführt. Die mit Fettsäuren und Geruchsstoffen beladene Waschflüssigkeit 19 gelangt zur Saugseite der Pumpe 6 und wird mit der am Kopf des Behälters 5 abgezogenen Gärflüssigkeit zusammen weiterbehandelt.

Von dem Austragsstrom 18 des Restschlammes werden in mehrstündigem Abstand Proben entnommen und in einem Labor 20 mit Bakterienkulturen aus dem Faulbehälter 11 inkubiert. Sodann wird die Anfangsfaulrate gemessen. Ist sie zu groß, daß heißt, ist der Restschlamm zu früh aus dem Gärreaktor 5 entnommen worden, so werden gemäß der Steuerleitung 21 die Stillstandsintervalle der intermittierend betriebenen Pumpe 22 verlängert, also im Rhythmus von einer Stunde oder einigen Stunden Verstellfunktionen zur Einregelung der jeweils passenden Entnahmemenge in dem beschriebenen Regelkreis ausgeübt.

Wegen der relativ kurzen Verweilzeit sind die Reaktoren 5 und 11, bezogen auf klassische Anlagen, kleine Behälter. Benötigt eine klassische einstufige Anlage für die Bearbeitung des Schlammes von 100 000 Einwohnern ein Reaktorvolumen von rund 2500 m³, so benötigt eine Anlage nach dem eingangs erwähnten bekannten Verfahren drei Reaktoren mit einem Gesamtvolumen von etwa 700 m³. Demgegenüber wird für das erfindungsgemäße Verfahren mit nur noch zwei Reaktoren ein Gesamtvolumen von ungefähr 400 m³ benötigt. Entsprechend verringern sich die Anlagekosten, verbessert sich also die Wirtschaftlichkeit, ohne daß am Umweltschutz Abstriche zu machen sind.

**Patentansprüche**

1. Verfahren zur biologischen Behandlung von organisch belasteten Schlämmen unter Luftabschluß durch Hydrolyse und saure Gärung und mit fortlaufender Abtrennung des sedimentierten Restschlammes vor Ausfaulung der Gärflüssigkeit, dadurch gekennzeichnet, daß der Restschlamm nach seiner Abtrennung durch Auswaschen von mitgeführter Gärflüssigkeit befreit, die mit der ausgewaschenen Gärflüssigkeit belastete Waschflüssigkeit der Gärflüssigkeit vor deren Faulprozeß beigemischt und der ausgelaugte Restschlamm ausgetragen wird.

2. Verfahren nach Anspruch 1, dadurch gekennzeichnet, daß als Waschflüssigkeit ausgefaulte Gärflüssigkeit verwendet wird.

3. Verfahren nach Anspruch 1 oder 2, dadurch gekennzeichnet, daß der sauren Gärung fortlaufend weitgehend ausgegorener Restschlamm entnommen wird.

4. Einrichtung zur Durchführung des Verfahrens nach einem der Ansprüche 1 bis 3, dadurch gekennzeichnet, daß an einem den Gesamtschlamm aufnehmenden und sedimentierend wirkenden Gärreaktor (5) durch eine Leitung (14) unmittelbar ein Restschlammwaschbehälter (15) angeschlossen ist, und daß der Restschlammwaschbehälter (15) mit einer Leitung versehen ist, die zu einer Absetzeinrichtung (17) führt, an der eine Leitung angeschlossen ist, zur Austragung des abgesetzten Schlammes.

5. Einrichtung nach Anspruch 4, dadurch gekennzeichnet, daß der Restschlammwaschbehälter (15) durch eine Leitung (13) mit dem Austritt (12) des Faulbehälters (11) verbunden ist.

**Claims**

1. Method for the biological treatment of organically charged slurries with the exclusion of air through hydrolysis and acid fermentation and with a continuous separation of the sedimented residual slurry before putrefaction of the fermentation fluid, characterized in that the residual slurry, after its separation, is freed of entrained fermentation fluid by washing out, the washing fluid charged with the washed out fermentation fluid is admixed to the fermentation fluid before its putrefaction process and the leached residual slurry is discharged.

2. Method according to Claim 1, characterized in that putrefied fermentation fluid is used as washing fluid.

3. Method according to Claim 1 or 2, characterized in that largely fermented residual slurry is continuously removed from the acid fermentation.

4. Device to carry out the method according to one of Claims 1 to 3, characterized in that a residual slurry washing container (15) is directly connected to a fermentation reactor (5) receiving the total slurry and acting in a sedimenting manner, through a pipe (14), and that the residual slurry washing container (15) is provided with a pipe which leads to a settling device (17), to which a pipe is connected for the discharge of the deposited slurry.

5. Device according to Claim 4, characterized in that the residual slurry washing container (15) is connected via a pipe (13) with the outlet (12) of the septic tank (11).

**Revendications**

1. Procédé de traitement biologique de boues organiquement chargées à l'abri de l'air par hydrolyse et fermentation acide et avec séparation continue de la boue résiduaire sédimentée avant digestion du liquide de fermentation, caractérisé en ce que la boue résiduaire, après sa séparation, est débarrassée, par lavage, du liquide de fermentation entraîné, liquide qui est ajouté au liquide de lavage du liquide de fermentation, chargé en liquide de fermentation lessivé, avant son processus de digestion, et en ce que la boue résiduaire lessivée est évacuée.

2. Procédé selon la revendication 1, caractérisé en ce qu'on utilise, comme liquide de lavage, le liquide de fermentation digéré.

3. Procédé selon la revendication 1 ou la revendication 2, caractérisé en ce que la boue résiduaire fermentée est retirée continuellement largement de la fermentation acide.

4. Dispositif pour la mise en œuvre du procédé selon l'une quelconque des revendications 1 à 3, caractérisé en ce qu'un réservoir de lavage (15) de la boue résiduaire est relié directement à un réacteur de fermentation (5) servant à la sédimentation et recueillant la boue en totalité par une conduite (14) et en ce que le réservoir de lavage (15) de la boue résiduaire est muni d'une conduite qui mène à un dispositif de décantation (17) auquel est reliée une conduite pour l'évacuation de la boue décantée.

5. Dispositif selon la revendication 4, caractérisé en ce que le réservoir de lavage (15) de la boue résiduaire est relié, par une conduite (13), à la sortie (12) du digesteur (11).